# EUROPEAN PATENT SPECIFICATION

(11) **EP 2 385 438 B1**
(45) Date of publication and mention of the grant of the patent: **21.05.2014**
(21) Application number: 10161845.2
(22) Date of filing: 04.05.2010
(51) Int. Cl.: G05F 1/56, H05B 33/08

(54) **Current output stage and method for providing an output current**
Stromabgabestufe und Verfahren zur Bereitstellung eines Ausgangsstroms
Étage de sortie de courant et procédé de fourniture d'un courant de sortie

(43) Date of publication of application: 09.11.2011
(73) Proprietor: Rohm Co., Ltd., Kyoto-shi, Kyoto 6158585 (JP)
(72) Inventor: Lookman, Paulo, 47877 Willich (DE); Fronen, Rob, 47877 Willich (DE); Chida, Taisuke, 47877 Willich (DE)
(74) Representative: Isarpatent

(56) References cited:
- JP-A- 60 226 204
- JP-A- 2002 351 557
- US-A1- 2004 008 017
- US-A1- 2009 289 702

## Description

### Background

The present invention relates to a current output stage, in particular for providing a stabilized output current to a current consumer such as a light emitting diode (LED) device. Further, the invention relates to an LED driver circuit and to a method for providing an output current.

Although generally applicable to current output stages for any application that requires a stable electric current, including e.g. DC-DC converters, motor and other actuator drivers, the present invention will be described in the context of a current output stage for an LED driver circuit. Such driver circuits are found e.g. in mobile phones, cameras and other mobile devices utilizing LEDs for display backlighting, photographic flash etc. and a battery as primary power source. Mobile devices often include several LEDs for different purposes, ranging from weak indicator lights to strong photographic flash lights, each of which may have to emit light at multiple brightness levels depending e.g. on user settings or ambient lighting conditions.

In order to drive the LED loads with high efficiency at specified brightness levels, a typical driver circuit includes a current output stage for providing a specified output current to be passed through the respective LED load. One type of a current output stage used in LED backlight driver products by Rohm Electronic utilizes two concatenated current mirror circuits, each including a large number of matched field effect transistors. However, the accuracy of the output current, which is limited in this type of circuit to the accuracy of the two current mirror circuits, is insufficient in particular for applications that demand a wide dynamic range of output currents to be supplied. Other disadvantages are a relatively high current consumption and a large die area requirement for implementation in an integrated circuit.
Other prior art current output stages can be found in US 2004/0008017 and JP 2002-351557.

Accordingly, a current output stage is provided for providing an output current between a current output terminal and a common potential. The current output stage comprises a sensing resistor for sensing the output current, a first end of the sensing resistor being connected to a voltage input terminal for receiving an input voltage against the common potential. Furthermore, the current regulator comprises an output current regulating element connected between the second end of the sensing resistor and the current output terminal, a level shifting unit connected to the second end of the sensing resistor, for shifting a sensing potential level of the second end of the sensing resistor toward the common potential, and a controller unit connected between the level shifting unit and the output current regulating element, for controlling the output current regulating element based on the shifted sensing potential level.

From the voltage input potential, the output current passes first through the sensing resistor and then through the output current regulating element before reaching the current output terminal. Across the sensing resistor, the output current causes a voltage drop. Because the first end of the sensing resistor is tied to the potential of the input voltage against the common potential, variations in the voltage drop across the sensing resistor caused by variations in the output current will lead to corresponding variations of the sensing potential level at the second end of the sensing resistor. Because the output current regulating element is controlled based on the sensing potential level, a closed control loop results that enables the output current to be regulated based on closed-loop feedback with correspondingly high accuracy and stability.

The output stage requires only a single instance of the output current regulating element, i.e. the output current regulating element does not have to be matched with other elements, such that manufacturing tolerances of the output current regulating element are prevented from negatively influencing the accuracy of current regulation. This enables to achieve high accuracy at low manufacturing cost. Because the output current passes only through the sensing resistor and the output current regulating element, these are the only components that have to be configured for high current. Die area required for other components of the output stage, in particular any components of the level shifting unit and the controller unit is therefore low.

Because the level shifting unit is configured to shift the level of the sensing potential towards the common potential before being passed on to the controller unit, the sensing potential and a required input potential at the input of the controller unit are decoupled and enabled to be optimized separately. In particular, the decoupling of the sensing potential from any input potential level that may be required by the controller unit enables to choose a small resistance value for the sensing resistor, implying a high sensing potential close to the input voltage potential, such that both power loss in the sensing resistor and die area required for the sensing resistor can be kept advantageously low. Also, because the required input potential at the controller unit is enabled to be freely chosen, the controller unit is enabled to be configured that an output potential level of the controller unit supplied to the output current regulating element is at an optimum level for efficiently driving the output current regulating element, thus enabling the output current regulating element to be manufactured using only a small die area. In consequence, the current output stage enables accurate stabilization of the output current while consuming only little energy and requiring only a small die area for the entire circuit.

Under a further aspect, the invention provides a method for regulating an output current between a current output terminal and a common potential. The method comprises a step of receiving an input voltage against the common potential, at a voltage input terminal connected to a first end of a sensing resistor, a step of passing the output current from the voltage input terminal through the sensing resistor and an output current regulating element connected between the second end of the sensing resistor and the current output terminal, and a step of shifting a sensing potential level of the second end of the sensing resistor toward the common potential, wherein the output current regulating element is controlled based on the shifted sensing potential level.

According to a preferred development, the common potential is grounded, i.e. connected to a common ground, chassis, or housing of a device comprising the output current stage. This enables a current consumer such as an LED to be connected to the common ground with one end, requiring only a single dedicated connection path from the other end to the current output terminal.

According to a preferred development, the output current regulating element comprises a transistor, enabling simple manufacturing and low cost. Preferably, the transistor is a field effect transistor, enabling high energy efficiency. Advantageously, the current output stage including the field effect transistor are configured such that the field effect transistor is driven substantially at full range from zero output current to a maximum sustainable drain current of the field effect transistor, which enables to further reduce the die area requirements of the current output stage by dimensioning the field effect transistor such that its current regulating capabilities are utilized to the full.

According to a preferred development, the current regulator further comprises a reference resistor for sensing a reference current. A first end of the reference resistor is connected to the voltage input terminal. The level shifting unit is adapted to shift a reference potential level of the second end of the reference resistor toward the common potential, and the controller unit is adapted to control the output current regulating element furthermore based on the shifted reference potential level. This enables particularly accurate control the output current based on the reference current, which can be precisely and conveniently provided e.g. by conventional current sources, which are common components in integrated circuit design. Preferably, the reference resistor has a larger resistance than the sensing resistor, such that only a small reference current is required in order to achieve a reference potential level that is comparable to the sensing potential level. Preferably, the reference resistor is larger than the sensing resistor by a factor of at least one hundred.

According to a preferred development, a reference-current setting unit connected to the second end of the reference resistor is provided for setting the reference current. This enables the reference current and thereby the output current to be controlled via the reference-current setting unit, e.g. through a digital code. Preferably, the reference-current setting unit comprises a setting-current source connected between the second end of the reference resistor and the common potential, for providing a setting current for setting the reference current in a simple way.

According to a preferred development, the controller unit is a differential stage adapted to control the output current regulating element based on a potential difference of the shifted sensing potential level and the shifted reference potential level. This is simple to implement and avoids interference e.g. from fluctuations in the input voltage.

According to a preferred development, the level shifting unit comprises a first and a second current-mirror transistor. The first current-mirror transistor has an input end connected to the second end of the sensing resistor, an output end connected to a first input of the controller unit, and a control end. The second current mirror transistor has an input end connected to the second end of the reference resistor, an output end connected to a second input of the controller unit, and a control end connected to the control end of the first current mirror transistor. The connected control ends of the first and second current-mirror transistors are furthermore connected to either the output end of the first current-mirror transistor or to the output end of the second current-mirror transistor. This implementation of the level shifting unit as a current mirror enables the level shifting unit to furthermore act as an amplifier that not only shifts but also amplifies any potential difference between the sensing potential level and the reference potential level. In this way, the controller unit is not required to provide high gain for driving the output current regulating element. Therefore, a simple design requiring little die area may be chosen for the controller unit. Also, a large bandwidth for regulation of the output current by the output current regulating element is easier to achieve. The output current regulating element may be driven in a voltage region where there is little gain but high efficiency with regard to die area requirement of the output current regulating element.

Preferably, the first and second current mirror transistors are matching bipolar transistors, the input ends being the emitter ends, the output ends being the collector ends, and the control ends being the base ends of each current-mirror transistor, respectively. This is advantageous because bipolar transistors can be matched easily and precisely in an integrated circuit, allowing precise operation at minimal cost. Because the output current does not pass through the bipolar transistors, a negative impact on overall efficiency is very low, comparing to field effect transistors as an alternative.

According to a preferred development, the level shifting unit further comprises a reference-resistor match resistor matched to the reference resistor, the input end of the first current mirror transistor being connected to the second end of the sensing resistor via the reference-resistor match resistor. This enables the output current to be proportional to the setting current, allowing easy control of the output current.

According to a preferred development, the level shifting unit further comprises a first bias current source for providing a first bias current, connected between the output end of the first current mirror transistor and the common potential, and a second bias current source for providing a second bias current matched to the first bias current, connected between the output end of the second current mirror transistor and the common potential. The matching of the bias current sources enhances the precision of the output current regulation.

### Brief description of the figures

Further aspects are illustrated in the accompanying drawing and described in detail in the following part of the description. In the figures,
- Fig. 1: is a circuit diagram of a current output stage for providing an output current according to an embodiment of the invention;
- Fig. 2: is another circuit diagram of a current output stage for providing an output current according to an embodiment;
- Fig. 3: is a potential diagram illustrating a method for providing an output current according to an embodiment of the invention; and
- Fig. 4: is an output characteristic diagram of a current regulating element of a current output stage according to an embodiment of the invention, which illustrates a method for providing an output current according to an embodiment.

Unless explicitly stated otherwise, throughout the figures the same reference numbers indicate the same or functionally equivalent means.

### Detailed description

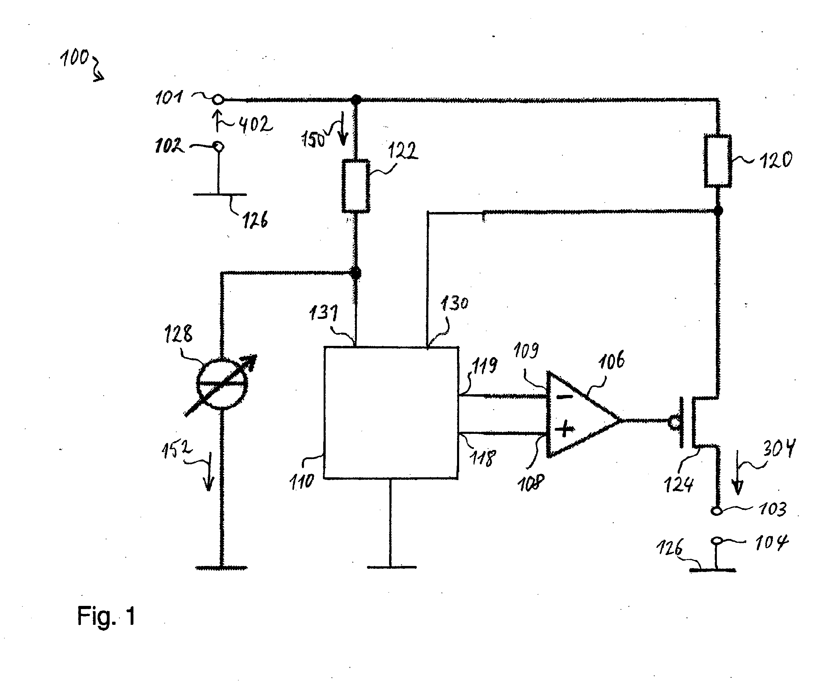

Figure 1 shows a circuit diagram of a current output stage 100 for providing an output current 304 between a current output terminal 103 and a common potential terminal 104, which is coupled to a common potential 126. The output stage 100 is suited to be installed e.g. as part of an LED driver circuit for driving indicator, backlighting and/or photographic flash LEDs of a mobile device such as a mobile phone. When installed in such a device (not shown), the LEDs or other current consumers of the output current 304 may be connected to the current output terminal 103 and the common potential terminal 104, either permanently or temporarily as needed. The common potential 126 may e.g. be coupled to a chassis or housing of the device, such that the current consumers can be connected between the current output terminal 103 and the chassis or housing.

The current output stage 100 furthermore has a voltage input terminal 101 and associated common potential terminal 102, for receiving an input voltage 402 against the common potential 126. When installed e.g. in a mobile device having a battery as main power source, the voltage input terminal 101 may be coupled to an output of a DC-DC converter that in a close-loop manner converts the battery voltage to an output voltage, against the common potential 126, of the DC-DC converter that is slightly greater than a required forward voltage across the LED load to be connected between the a current output terminal 103 and the common potential 126.

The current output stage 100 furthermore comprises a current sensing resistor 120 for sensing the output current 304 and an output-current regulating transistor 124, implemented as a p-channel field effect transistor, for regulating the output current 304. The sensing resistor 120 is coupled with a first end to the voltage input terminal 101 and with the second end to the source end of the output-current regulating transistor 124, while the drain end of the output-current regulating transistor 124 is coupled to the current output terminal 103. The gate end of the output-current regulating transistor 124 is connected to an output of a comparator 106 of the current output stage 100, which forms a control unit for controlling the output-current regulating transistor 124. The sensing resistor 120 has a low resistance of ca. 100 mΩ. However, other values such as between ca. 10 mΩ and ca. 1 Ω may be chosen.

The current output stage 100 furthermore comprises a reference resistor 122 for sensing a reference current 150, and a reference-current setting current source 128 for setting the reference current 150. The reference resistor 122 is coupled with a first end to the voltage input terminal 101 and with a second end to a first end of the reference-current setting current source 128, while the second end of the reference-current setting current source 128 is connected to the common potential 126. While in the present example the reference resistor 122 has a resistance of ca. 100 Ω, other values such as between ca. 10 Ω and ca. 1 KΩ may be chosen. The reference-current setting current source 128 is a digitally adjustable current source which provides a setting current 152 according to a digital code input (not shown).

The current output stage 100 furthermore comprises a level shifting unit 110 having a first input 130 coupled to the second end of the sensing resistor 120 and a second input 131 coupled to the second end of the reference resistor 122. The level shifting unit 110 is adapted to shift both a sensing potential received at the first input 130, from the second end of the sensing resistor 120, and a reference potential received at the second input 131, from the second end of the reference resistor 120, toward the common potential 126, at the same time amplifying the potential difference between the sensing potential and the reference potential. The level shifting unit 110 has a first output 119 for presenting, after the shifting and amplifying operation, the shifted sensing potential level, and a second output 118 for presenting, after the shifting and amplifying operation, the shifted reference potential level. The first output 119 is coupled to an inverting input 109 of the comparator 106, and the second output 118 is coupled to a non-inverting input 108 of the comparator 106. The level shifting unit 110 furthermore comprises a connection to the common potential 126. Similarly, the comparator 106 as well may have further connections (not shown) to the common potential 126 and/or to the voltage input terminal 101.

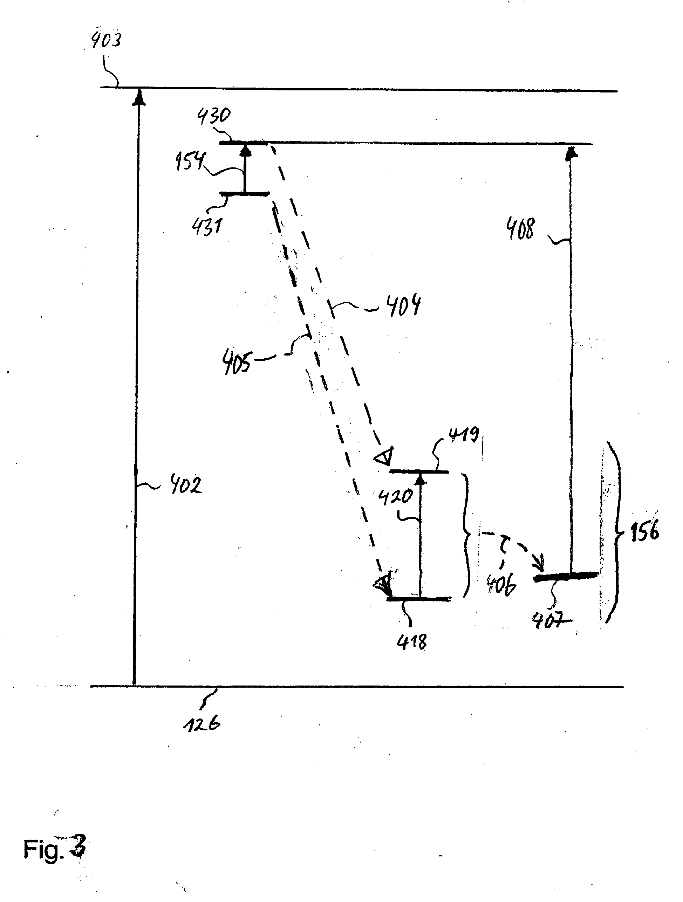

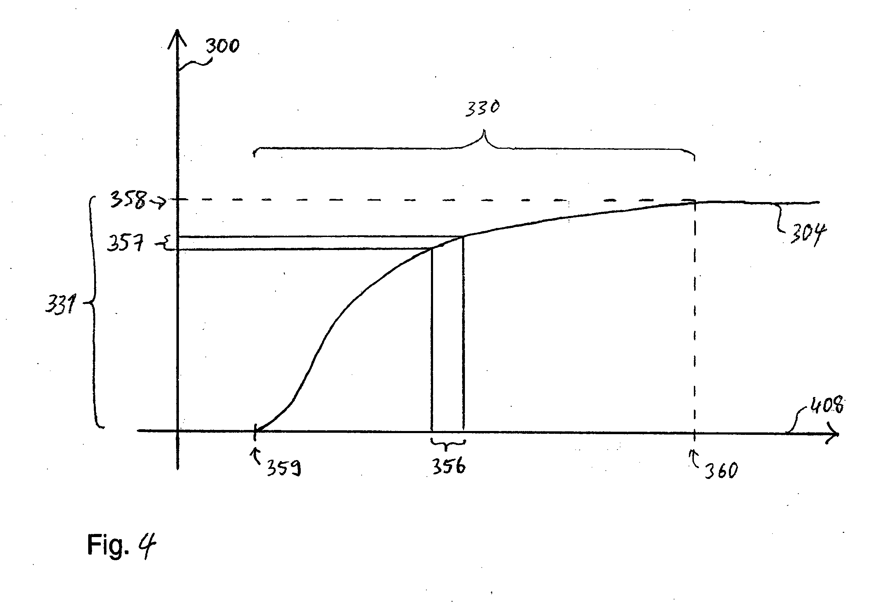

The operation of the output stage 100 shown in Fig. 1 will now be explained by making reference to Figs. 3 and 4. Figure 3 is a potential diagram illustrating in the vertical direction potential levels and voltages within the current output stage 100 during its operation. A horizontal line at the bottom of the diagram marks the common potential 126. In a first step, a current consumer such as an LED or group of LEDs is connected between the current output terminal 103 and the common potential 126.

Next, a voltage source (not shown) such as a DC-DC converter drawing power from a battery is connected to the voltage input terminal 101 and the common potential terminal 102 in order to supply an input voltage 402 for the output stage 100. Thereby, the voltage input terminal 101 assumes the input voltage potential 403 against the common potential 126.

Due to the input voltage 402 being supplied and the current consumer being connected, the current output terminal 103 supplies an output current 304 to the current consumer, the strength of the output current 304 depending on the channel conductance of the output-current regulating transistor 124. The output current 304 causes a voltage drop across the sensing resistor 120 due to which voltage drop the second end of the sensing resistor 120 assumes a sensing potential 430 lower than the input voltage potential 403.

Meanwhile, the reference-current setting current source 128 supplies a setting current 152 in accordance with a digital code supplied from digital setting means (not shown). Due to a high impedance of the second input 131 of the level shifting unit 110, the reference current 150 (substantially equal to the setting current 152) flows through the reference resistor 122, causing a voltage drop across the reference resistor 122 due to which voltage drop the second end of the reference resistor 122 assumes a reference potential 431 lower than the input voltage potential 403.

Due to the resistance of the reference resistor 122 being larger than the resistance of the sensing resistor 120 by a factor of f = (100 Ω / 100 mΩ) = 1000, the potential difference between the sensing potential 430 and the reference potential 431 will be zero when the output current 304 is larger than the reference current 122 by the same factor f. Figure 3 illustrates an example situation wherein the sensing potential 430 lies above the reference potential 431, corresponding to the output current being less than f times the reference current. As Fig. 3 shows, the resistances of the sensing 120 and reference 122 resistors are chosen such that in normal operation the sensing 430 and reference 431 potentials remain close to the input voltage potential 403.

Next, the level shifting unit 110 shifts with 404 the sensing potential 430 and shifts with 405 the reference potential 431 toward the common potential 126, i.e. downwards in Fig. 3 and presents the shifted sensing 419 and shifted reference 418 potentials at its first 119 and second 118 outputs, respectively. Simultaneously to the shifting process, the potential difference 154 between the sensing 430 and reference 431 potentials amplified, such that at the lower potential level due to the shifting 404, 405, the amplified potential difference 420 is presented to the inputs 109, 108 of the comparator 106.

The comparator 106 generates 406 a comparator output potential 407 generally close to the level of the input potentials 418, 419 and depending on the voltage difference between them. In the example shown in Fig. 3, the input potential 418 at the non-inverting input 108 of the comparator 106 is lower than the input potential 419 at the inverting input 109, leading to an output potential 407 of the comparator that is relatively low within the range 156 of possible values of the output potential 407. The output potential 407 is supplied to the gate end of the output-current regulating transistor 124, driving it with a negative gate-source voltage 408 of relatively large absolute value within the range of possible absolute values of the gate-source voltage 408, which corresponds to the potential difference between the output potential 407 of the comparator 106 and the sensing potential 430.

Figure 4 illustrates a characteristic of the output-current regulating transistor 124, showing along a vertical current axis 300 the output current 304 (drain current) in dependence on the gate-source voltage 408, both considered here by their respective absolute values. On the horizontal axis, a marked range 356 of possible gate-source voltages that can be supplied in operation by the comparator 106 corresponds to the above range 156 of possible values of the output potential 407 of the comparator 106. On the vertical axis 300, the corresponding range 357 of values of the output current 304 has been marked, which forms a subrange of the entire range 331 of possible absolute values of the output current 304, from zero up to a maximum drain current amount 358 that is sustainable by the output-current regulating transistor.

The range 356 of possible gate-source voltages 408 suppliable by the comparator 106 lies within a full gate-source voltage range 330 that is bounded a threshold voltage 359 of the output-current regulating transistor and a maximum gate-source voltage amount 360 defined as |U_{GS}|ₘₐₓ = |Uᵢₙₚᵤₜ| - |Uₛₑₙₛₑ|ₘₐₓ voltage amount, wherein Uᵢₙₚᵤₜ is the input voltage 402 and |Uₛₑₙₛₑ|ₘₐₓ is the amount of the voltage drop across the sensing resistor resulting from the amount of output current 304 that flows through the sensing resistor when the maximum gate-source voltage amount 360 is applied. The position of the range 356 of possible gate-source voltages 408 as shown within the full gate-source voltage range 330 is purely exemplary and may be chosen e.g. closer to the threshold voltage 359 in order to achieve a high gain, or closer to the maximum gate-source voltage amount 360, in a region characterized by high output current 304 and only slight variation of the output current 304 with the gate-source voltage 408, in order to achieve a high amount of output current 304 at little die area, depending on application specific design requirements. Also, the range 356 of possible gate-source voltages 408 may be chosen to substantially coincide with the full gate-source voltage range 330. In this case, the output-current regulating transistor may be dimensioned such that it is driven at full range, i.e. such that the output current 304 substantially reaches the maximum drain current amount 358 sustainable by the output-current regulating transistor when the maximum gate-source voltage amount 360 is applied.

The relatively large absolute amount of the gate-source voltage 408 within the range 356 of possible values of the gate-source voltage 408 in the example according to Fig. 3 will lead to an increase of the output current 304, which in turn will cause the sensing potential 430 to drop until the sensing potential 430 coincides with the reference potential 431.

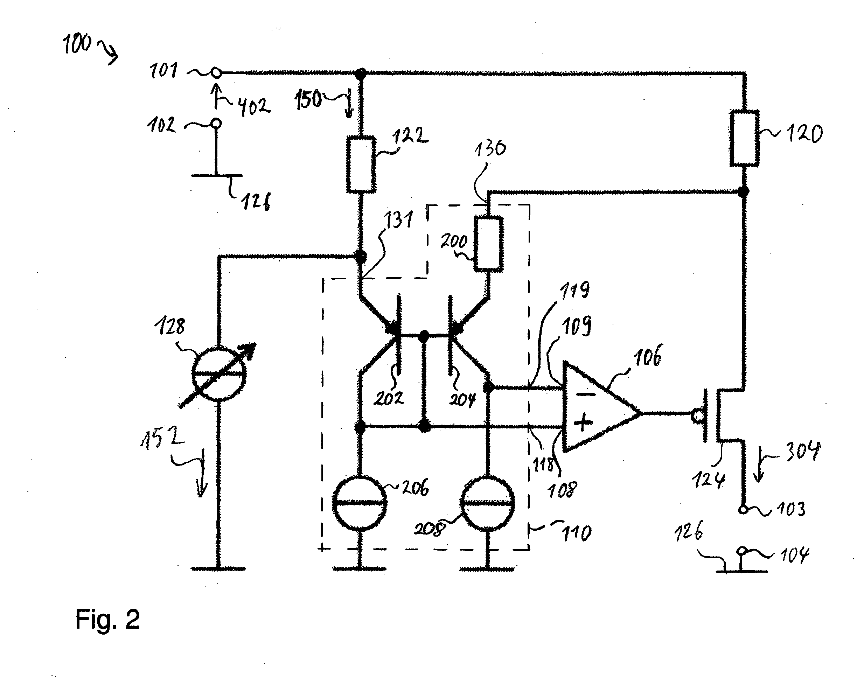

Figure 2 illustrates an output current stage 100, e.g. the output current stage 100 of Fig. 1, showing an example of an implementation of the level shifting unit 110. Within the level shifting unit 110, a first 204 and a second 202 PNP bipolar transistor are connected at their base ends in a current mirror configuration. The emitter of the first bipolar transistor 204 is connected to the first input 130 of the level shifting unit 110 via a match resistor 200 of the level shifting unit 110 that is matched to the reference resistor 122. The emitter of the second bipolar transistor 202 is directly connected to the second input 131 of the level shifting unit 110. The collectors of the first 204 and second 202 bipolar transistors are connected to the first 119 and second 118 outputs, respectively, of the level shifting device 110, the collector of the second bipolar transistor additionally being connected to the coupled bases of both bipolar transistors 204, 202. In alternative embodiments, the coupled bases of the bipolar transistors 204, 202 are connected to the collector of the first bipolar transistor instead.

Furthermore, the level shifting device comprises a first 208 and a second 206 bias current source connected between the common potential 126 and the collectors of the first 204 and second 202 bipolar transistors, respectively. The bias current sources 208, 206 are matched to each other and in order to achieve high output current precision and low power loss are preferably adapted to provide a bias current that substantially equals a minimum non-zero setting current 152 that is supplied in operation by the reference-current setting current source 128.

The invention is not restricted to the embodiments described above but can be modified in manifold ways. For example, the bias current sources 208, 206, may be substituted by resistors in principle. However, bias current sources with large impedances in comparison to the resistances of the reference 122 and match 200 resistors can be shown to lead to a large amplification gain provided by the level shifting unit 110 with respect to variations in the sensing potential level 430. A high amplification gain is desirable since it enables to tolerate a higher input offset in the comparator 106, so that a less complex circuit can be chosen for the comparator 106.

Optionally, the input offset presented to the comparator 106 may be reduced by applying dynamic element matching to the current-mirror transistors 204, 202 such that both transistors 204, 202 are interchanged for each other at regular intervals, suppressing a resulting high-frequency signal in the output current 304 by means of a low-pass filter. Advantageously, dynamic element matching is applied to a first combined structure, which includes the first current-mirror transistor 204 and the first current bias source 208, and a second combined structure, which includes the second current-mirror transistor 202 and the second current bias source 206.

Also, while in the above embodiments a high-side current output stage has been described in which the common potential 126 is grounded and the output-current regulating element 124 is connected to the at a higher-potential side of a current consumer connected between the current output terminal 103 and a common potential terminal 104, alternative embodiments providing a low-side current output stage may easily be conceived by the skilled person. For example, a low-side current output stage is derivable from the embodiment shown in Fig. 2 by grounding the voltage input terminal 101 instead of the common potential 126 and by reversing all polarities, including replacing the current mirror transistors 202, 204 by corresponding NPN bipolar transistors. Furthermore, NPN and PNP bipolar transistors may be replaced with n-MOS and p-MOS field effect transistors, respectively, in all embodiments.

## Claims

1. Current output stage (100) for providing an output current (304) between a current output terminal (103) and a common potential (126), comprising:
- a sensing resistor (120) for sensing the output current (304), a first end of the sensing resistor (120) being connected to a voltage input terminal (101) for receiving an input voltage (402) against the common potential (126);
- an output current regulating element (124) connected between the second end of the sensing resistor (120) and the current output terminal (103);
- a reference resistor (122) for sensing a reference current (150), a first end of the reference resistor (122) being connected to the voltage input terminal (101);
- a reference-current setting unit (128) connected to the second end of the reference resistor (122), for setting the reference current (150);
- a level shifting unit (110) having a first input (130) connected to the second end of the sensing resistor (120) and a second input (131) connected to the second end of the reference resistor (122), for shifting (404) a sensing potential level (430) of the second end of the sensing resistor (120) and a reference potential level (431) of the second end of the reference resistor (122) toward the common potential (126), the level shifting unit (110) having a first output (119) for presenting the shifted sensing potential level (419) and a second output (118) for presenting the shifted reference potential level (418); and
- a controller unit (106) connected between the first output (119) and second output (118) of the level shifting unit (110) and the output current regulating element (124), for controlling the output current regulating element (124) based on the shifted sensing potential level (419) and the shifted reference potential level (418).

2. Current output stage (100) according to claim 1, wherein the level shifting unit is adapted to amplify the potential difference between the sensing potential level (430) and the reference potential level (431).

3. Current output stage (100) according to claim 1 or 2, wherein the output current regulating element (124) comprises a transistor, in particular a field effect transistor.

4. Current output stage (100) according to any one of the preceding claims, wherein the reference resistor (122) comprises a larger resistance than the sensing resistor (120), in particular by a factor of at least 100.

5. Current output stage (100) according to any one of the preceding claims, wherein the reference-current setting unit (128) comprises a setting-current source connected between the second end of the reference resistor (122) and the common potential (104), for providing a setting current (152) for setting the reference current (150).

6. Current output stage (100) according to any one of the preceding claims, wherein the controller unit (106) is a differential stage adapted to control the output current regulating element (124) based on a potential difference (420) of the shifted sensing potential level (419) and the shifted reference potential level (418).

7. Current output stage (100) according to any one of the preceding claims, wherein the level shifting unit (110) comprises:
- a first current-mirror transistor (204) having an input end connected to the second end of the sensing resistor (120), an output end connected to a first input (109) of the controller unit (106), and a control end; and
- a second current-mirror transistor (202) having an input end connected to the second end of the reference resistor (122), an output end connected to a second input (108) of the controller unit (106), and a control end connected to the control end of the first current mirror transistor (204) and to one of the output ends of the first (204) and second (202) current-mirror transistors.

8. Current output stage (100) according to claim 7, wherein the first (204) and second (202) current-mirror transistors are matching bipolar transistors, the input ends being the emitter ends, the output ends being the collector ends, and the control ends being the base ends of each current-mirror transistor (204, 202), respectively.

9. Current output stage (100) according to claim 7 or 8, the level shifting unit (110) comprises a reference-resistor match resistor (200) matched to the reference resistor (122), the input end of the first current mirror transistor (204) being connected to the second end of the sensing resistor (120) via the reference-resistor match resistor (200).

10. Current output stage (100) according to any one of claims 7 to 9, wherein the level shifting unit (110) comprises:
- a first bias current source (208) connected between the output end of the first current mirror transistor (204) and the common potential (126); and
- a second bias current source (206) matched to the first bias current source (208) and connected between the output end of the second current mirror transistor (202) and the common potential (126).

11. Light emitting diode driver circuit for driving at least one light emitting diode, the circuit comprising the current output stage (100) according to any one of the preceding claims.

12. Method for providing an output current (304) between a current output terminal (103) and a common potential (126), the method comprising:
- receiving an input voltage against the common potential (126), at a voltage input terminal (101) connected to a first end of a sensing resistor (120);
- passing the output current (304) from the voltage input terminal (101) through the sensing resistor (120) and an output current regulating element (124) connected between the second end of the sensing resistor (120) and the current output terminal (103);
- providing a reference resistor (122) for sensing a reference current (150), a first end of the reference resistor (122) being connected to the voltage input terminal (101) and a reference-current setting unit (128) connected to the second end of the reference resistor (122), for setting the reference current (150);
- shifting (404) a sensing potential level (430) of the second end of the sensing resistor (120) and a reference potential level (431) of the second end of the reference resistor (122) toward the common potential (104) by using a level shifting unit (110) having a first input (130) connected to the second end of the sensing resistor (120) and a second input (131) connected to the second end of the reference resistor (122);
- presenting the shifted sensing potential level (419) at a first output (119) of, and the shifted reference potential level (418) at a second output (118) of the level shifting unit (110); and
- controlling (406) the output current regulating element (124) based on the shifted sensing potential level (419) and the shifted reference potential level (418).

13. Method according to claim 12, further comprising grounding the common potential (126).

14. Method according to claim 12 or 13" further comprising amplifying the potential difference between the sensing potential level (430) and the reference potential level (431).

15. Method according to any one of claims 12 to 14, wherein the output current regulating element (124) comprises a field effect transistor, the step of controlling (406) the output current regulating element (124) comprising driving the field effect transistor substantially at a full output current range (331) from zero to a maximum sustainable drain current (358) of the field effect transistor.

## Patentansprüche

1. Stromausgangsstufe (100) zum Bereitstellen eines Ausgangsstroms (304) zwischen einem Stromausgangsanschluss (103) und einem gemeinsamen Potenzial (126), die Folgendes umfasst:
- einen Fühlerwiderstand (120) zum Abfühlen des Ausgangsstroms (304), wobei ein erstes Ende des Fühlerwiderstands (120) mit einem Spannungseingangsanschluss (101) verbunden ist, um eine Eingangsspannung (402) gegen das gemeinsame Potenzial (126) zu empfangen;
- ein Ausgangsstromregelelement (124), das zwischen dem zweiten Ende des Fühlerwiderstands (120) und dem Stromausgangsanschluss (103) verbunden ist;
- einen Bezugswiderstand (122) zum Abfühlen eines Bezugsstroms (150), wobei ein erstes Ende des Bezugswiderstands (122) mit dem Spannungseingangsanschluss (101) verbunden ist;
- eine Bezugsstromeinstelleinheit (128), die mit dem zweiten Ende des Bezugswiderstands (122) verbunden ist, zum Einstellen des Bezugsstroms (150);
- eine Pegelverschiebeeinheit (110) mit einem ersten Eingang (130), der mit dem zweiten Ende des Fühlerwiderstands (120) verbunden ist, und einem zweiten Eingang (131), der mit dem zweiten Ende des Bezugswiderstands (122) verbunden ist, zum Verschieben (404) eines Abfühlpotenzialpegels (430) des zweiten Endes des Fühlerwiderstands (120) und eines Bezugspotentialpegels (431) des zweiten Endes des Bezugswiderstands (122) in Richtung des gemeinsamen Potenzials (126), wobei die Pegelverschiebeeinheit (110) einen ersten Ausgang (119) zum Ausgeben des verschobenen Abfühlpotenzialpegels (419) und einen zweiten Ausgang (118) zum Ausgeben des verschobenen Bezugspotentialpegels (418) aufweist; und
- eine Controllereinheit (106), die zwischen dem ersten Ausgang (119) und dem zweiten Ausgang (118) der Pegelverschiebeeinheit (110) und des Ausgangsstromregelelements (124) verbunden ist, zum Steuern des Ausgangsstromregelelements (124) auf der Grundlage des verschobenen Abfühlpotenzialpegels (419) und des verschobenen Bezugspotentialpegels (418).

2. Stromausgangsstufe (100) nach Anspruch 1, wobei die Pegelverschiebeeinheit dafür geeignet ist, den Potenzialunterschied zwischen dem Abfühlpotenzialpegel (430) und dem Bezugspotentialpegel (431) zu verstärken.

3. Stromausgangsstufe (100) nach Anspruch 1 oder 2, wobei das Ausgangsstromregelelement (124) einen Transistor, insbesondere einen Feldeffekttransistor, umfasst.

4. Stromausgangsstufe (100) nach einem der vorangehenden Ansprüche, wobei der Bezugswiderstand (122) einen größeren Widerstandswert als der Fühlerwiderstand (120), insbesondere um einen Faktor von mindestens 100, umfasst.

5. Stromausgangsstufe (100) nach einem der vorangehenden Ansprüche, wobei die Bezugsstromeinstelleinheit (128) eine Einstellstromquelle umfasst, die zwischen dem zweiten Ende des Bezugswiderstands (122) und dem gemeinsamen Potenzial (104) verbunden ist, um einen Einstellstrom (152) zum Einstellen des Bezugsstroms (150) bereitzustellen.

6. Stromausgangsstufe (100) nach einem der vorangehenden Ansprüche, wobei die Controllereinheit (106) eine Differenzialstufe ist, die dafür geeignet ist, das Ausgangsstromregelelement (124) auf der Grundlage eines Potenzialunterschieds (420) des verschobenen Abfühlpotenzialpegels (419) und des verschobenen Bezugspotentialpegels (418) zu steuern.

7. Stromausgangsstufe (100) nach einem der vorangehenden Ansprüche, wobei die Pegelverschiebeeinheit (110) Folgendes umfasst:
- einen ersten Stromspiegeltransistor (204) mit einem Eingangsende, das mit dem zweiten Ende des Fühlerwiderstands (120) verbunden ist, einem Ausgangsende, das mit einem ersten Eingang (109) der Controllereinheit (106) verbunden ist, und einem Steuerende; und
- einen zweiten Stromspiegeltransistor (202) mit einem Eingangsende, das mit dem zweiten Ende des Bezugswiderstands (122) verbunden ist, einem Ausgangsende, das mit einem zweiten Eingang (108) der Controllereinheit (106) verbunden ist, und einem Steuerende, das mit dem Steuerende des ersten Stromspiegeltransistors (204) und mit einem der Ausgangsenden des ersten (204) und des zweiten (202) Stromspiegeltransistors verbunden ist.

8. Stromausgangsstufe (100) nach Anspruch 7, wobei der erste (204) und der zweite (202) Stromspiegeltransistor aufeinander abgestimmte Bipolartransistoren sind, wobei die Eingangsenden die Emitterenden, die Ausgangsenden die Kollektorenden und die Steuerenden die Basisenden jedes Stromspiegeltransistors (204, 202) sind.

9. Stromausgangsstufe (100) nach Anspruch 7 oder 8, wobei die Pegelverschiebeeinheit (110) einen Bezugswiderstands-Abstimmungswiderstand (200) umfasst, der auf den Bezugswiderstand (122) abgestimmt ist, wobei das Eingangsende des ersten Stromspiegeltransistors (204) über den Bezugswiderstands-Abstimmungswiderstand (200) mit dem zweiten Ende des Fühlerwiderstands (120) verbunden ist.

10. Stromausgangsstufe (100) nach einem der Ansprüche 7 bis 9, wobei die Pegelverschiebeeinheit (110) Folgendes umfasst:
- eine erste Vorspannstromquelle (208), die zwischen dem Ausgangsende des ersten Stromspiegeltransistors (204) und dem gemeinsamen Potenzial (126) verbunden ist; und
- eine zweite Vorspannstromquelle (206), die auf die erste Vorspannstromquelle (208) abgestimmt ist und zwischen dem Ausgangsende des zweiten Stromspiegeltransistors (202) und dem gemeinsamen Potenzial (126) verbunden ist.

11. Leuchtdiodenansteuerschaltkreis zum Ansteuern mindestens einer Leuchtdiode, wobei der Schaltkreis die Stromausgangsstufe (100) nach einem der vorangehenden Ansprüche umfasst.

12. Verfahren zum Bereitstellen eines Ausgangsstroms (304) zwischen einem Stromausgangsanschluss (103) und einem gemeinsamen Potenzial (126), wobei das Verfahren Folgendes umfasst:
- Empfangen einer Eingangsspannung gegen das gemeinsame Potenzial (126) an einem Spannungseingangsanschluss (101), der mit einem ersten Ende eines Fühlerwiderstands (120) verbunden ist;
- Leiten des Ausgangsstroms (304) von dem Spannungseingangsanschluss (101) durch den Fühlerwiderstand (120) und ein Ausgangsstromregelelement (124), das zwischen dem zweiten Ende des Fühlerwiderstands (120) und dem Stromausgangsanschluss (103) verbunden ist;
- Bereitstellen eines Bezugswiderstands (122) zum Abfühlen eines Bezugsstroms (150), wobei ein erstes Ende des Bezugswiderstands (122) mit dem Spannungseingangsanschluss (101) verbunden ist und eine Bezugsstromeinstelleinheit (128) mit dem zweiten Ende des Bezugswiderstands (122) verbunden ist, zum Einstellen des Bezugsstroms (150);
- Verschieben (404) eines Abfühlpotenzialpegels (430) des zweiten Endes des Fühlerwiderstands (120) und eines Bezugspotentialpegels (431) des zweiten Endes des Bezugswiderstands (122) in Richtung des gemeinsamen Potenzials (104) unter Verwendung einer Pegelverschiebeeinheit (110) mit einem ersten Eingang (130), der mit dem zweiten Ende des Fühlerwiderstands (120) verbunden ist, und einem zweiten Eingang (131), der mit dem zweiten Ende des Bezugswiderstands (122) verbunden ist;
- Anlegen des verschobenen Abfühlpotenzialpegels (419) an einen ersten Ausgang (119) der, und des verschobenen Bezugspotentialpegels (418) an einen zweiten Ausgang (118) der, Pegelverschiebeeinheit (110); und
- Steuern (406) des Ausgangsstromregelelements (124) auf der Grundlage des verschobenen Abfühlpotenzialpegels (419) und des verschobenen Bezugspotentialpegels (418).

13. Verfahren nach Anspruch 12, das des Weiteren das Erden des gemeinsamen Potenzials (126) umfasst.

14. Verfahren nach Anspruch 12 oder 13, das des Weiteren das Verstärken des Potenzialunterschieds zwischen dem Abfühlpotenzialpegel (430) und dem Bezugspotentialpegel (431) umfasst.

15. Verfahren nach einem der Ansprüche 12 bis 14, wobei das Ausgangsstromregelelement (124) einen Feldeffekttransistor umfasst, wobei der Schritt des Steuerns (406) des Ausgangsstromregelelements (124) das Ansteuern des Feldeffekttransistors im Wesentlichen bei einem vollen Ausgangsstrombereich (331) von null bis zu einem maximalen aufrecht erhaltbaren Abzugsstrom (358) des Feldeffekttransistors umfasst.

## Revendications

1. Etage de sortie de courant (100) pour fournir un courant de sortie (304) entre une borne de sortie de courant (103) et un potentiel commun (126), comprenant :
- une résistance de détection (120) pour détecter le courant de sortie (304), une première extrémité de la résistance de détection (120) étant connectée à une borne d'entrée de tension (101) pour recevoir une tension d'entrée (402) par rapport au potentiel commun (126) ;
- un élément de régulation de courant de sortie (124) connecté entre la seconde extrémité de la résistance de détection (120) et la borne de sortie de courant (103) ;
- une résistance de référence (122) pour détecter un courant de référence (150), une première extrémité de la résistance de référence (122) étant connectée à la borne d'entrée de tension (101) ;
- une unité de réglage de courant de référence (128) connectée à la seconde extrémité de la résistance de référence (122), pour régler le courant de référence (150) ;
- une unité de décalage de niveau (110) ayant une première entrée (130) connectée à la seconde extrémité de la résistance de détection (120) et une seconde entrée (131) connectée à la seconde extrémité de la résistance de référence (122), pour décaler (404) un niveau de potentiel de détection (430) de la seconde extrémité de la résistance de détection (120) et un niveau de potentiel de référence (431) de la seconde extrémité de la résistance de référence (122) vers le potentiel commun (126), l'unité de décalage de niveau (110) ayant une première sortie (119) pour présenter le niveau de potentiel de détection décalé (419) et une seconde sortie (118) pour présenter le niveau de potentiel de référence décalé (418) ; et
- une unité de commande (106) connectée entre la première sortie (119) et la seconde sortie (118) de l'unité de décalage de niveau (110) et l'élément de régulation de courant de sortie (124), pour commander l'élément de régulation de courant de sortie (124) sur la base du niveau de potentiel de détection décalé (419) et du niveau de potentiel de référence décalé (418).

2. Etage de sortie de courant (100) selon la revendication 1, dans lequel l'unité de décalage de niveau est conçue pour amplifier la différence de potentiel entre le niveau de potentiel de détection (430) et le niveau de potentiel de référence (431).

3. Etage de sortie de courant (100) selon la revendication 1 ou 2, dans lequel l'élément de régulation de courant de sortie (124) comprend un transistor, en particulier un transistor à effet de champ.

4. Etage de sortie de courant (100) selon l'une quelconque des revendications précédentes, dans lequel la résistance de référence (122) comprend une résistance plus grande que la résistance de détection (120), en particulier par un facteur d'au moins 100.

5. Etage de sortie de courant (100) selon l'une quelconque des revendications précédentes, dans lequel l'unité de réglage de courant de référence (128) comprend une source de courant de réglage connectée entre la seconde extrémité de la résistance de référence (122) et le potentiel commun (104), pour fournir un courant de réglage (152) pour régler le courant de référence (150).

6. Etage de sortie de courant (100) selon l'une quelconque des revendications précédentes, dans lequel l'unité de commande (106) est un étage différentiel conçu pour commander l'élément de régulation de courant de sortie (124) sur la base d'une différence de potentiel (420) du niveau de potentiel de détection décalé (419) et du niveau de potentiel de référence décalé (418).

7. Etage de sortie de courant (100) selon l'une quelconque des revendications précédentes, dans lequel l'unité de décalage de niveau (110) comprend :
- un premier transistor de miroir de courant (204) ayant une extrémité d'entrée connectée à la seconde extrémité de la résistance de détection (120), une extrémité de sortie connectée à une première entrée (109) de l'unité de commande (106), et une extrémité de commande ; et
- un second transistor de miroir de courant (202) ayant une extrémité d'entrée connectée à la seconde extrémité de la résistance de référence (122), une extrémité de sortie connectée à une seconde entrée (108) de l'unité de commande (106), et une extrémité de commande connectée à l'extrémité de commande du premier transistor de miroir de courant (204) et à l'une des extrémités de sortie des premier (204) et second (202) transistors de miroir de courant.

8. Etage de sortie de courant (100) selon la revendication 7, dans lequel les premier (204) et second (202) transistors de miroir de courant sont des transistors bipolaires appariés, les extrémités d'entrée étant les extrémités d'émission, les extrémités de sortie étant les extrémités collectrices, et les extrémités de commande étant les extrémités de base de chaque transistor de miroir de courant (204, 202), respectivement.

9. Etage de sortie de courant (100) selon la revendication 7 ou 8, l'unité de décalage de niveau (110) comprend une résistance d'adaptation à la résistance de référence (200) adaptée à la résistance de référence (122), l'extrémité d'entrée du premier transistor de miroir de courant (204 ) étant connectée à la seconde extrémité de la résistance de détection (120) par l'intermédiaire de la résistance d'adaptation à la résistance de référence (200).

10. Etage de sortie de courant (100) selon l'une quelconque des revendications 7 à 9, dans lequel l'unité de décalage de niveau (110) comprend :
- une première source de courant de polarisation (208) connectée entre l'extrémité de sortie du premier transistor de miroir de courant (204) et le potentiel commun (126) ; et
- une seconde source de courant de polarisation (206) adaptée à la première source de courant de polarisation (208) et connectée entre l'extrémité de sortie du second transistor de miroir de courant (202) et le potentiel commun (126).

11. Circuit d'attaque de diode électroluminescente pour commander au moins une diode électroluminescente, le circuit comprenant l'étage de sortie de courant (100) selon l'une quelconque des revendications précédentes.

12. Procédé de fourniture d'un courant de sortie (304) entre une borne de sortie de courant (103) et un potentiel commun (126), le procédé comprenant :
- réception d'une tension d'entrée par rapport au potentiel commun (126), au niveau d'une borne d'entrée de tension (101) connectée à une première extrémité d'une résistance de détection (120) ;
- passage du courant de sortie (304) à partir de la borne d'entrée de tension (101) à travers la résistance de détection (120) et un élément de régulation de courant de sortie (124) connecté entre la seconde extrémité de la résistance de détection (120) et la borne de sortie de courant (103) ;
- fourniture d'une résistance de référence (122) pour détecter un courant de référence (150), une première extrémité de la résistance de référence (122) étant connectée à la borne d'entrée de tension (101) et une unité de réglage de courant de référence (128) étant connectée à la seconde extrémité de la résistance de référence (122), pour régler le courant de référence (150) ;
- décalage (404) d'un niveau de potentiel de détection (430) de la seconde extrémité de la résistance de détection (120) et d'un niveau de potentiel de référence (431) de la seconde extrémité de la résistance de référence (122) vers le potentiel commun (104) en utilisant une unité de décalage de niveau (110) ayant une première entrée (130) connectée à la seconde extrémité de la résistance de détection (120) et une seconde entrée (131) connectée à la seconde extrémité de la résistance de référence (122) ;
- présentation du niveau de potentiel de détection décalé (419) à une première sortie (119) de, et du niveau de potentiel de référence décalé (418) à une seconde sortie (118) de l'unité de décalage de niveau (110) ; et
- commande (406) de l'élément de régulation de courant de sortie (124) sur la base du niveau de potentiel de détection décalé (419) et du niveau de potentiel de référence décalé (418).

13. Procédé selon la revendication 12, comprenant en outre la mise à la terre du potentiel commun (126).

14. Procédé selon la revendication 12 ou 13, comprenant en outre l'amplification de la différence de potentiel entre le niveau de potentiel de détection (430) et le niveau de potentiel de référence (431).

15. Procédé selon l'une quelconque des revendications 12 à 14, dans lequel l'élément de régulation de courant de sortie (124) comprend un transistor à effet de champ, l'étape de commande (406) de l'élément de régulation de courant de sortie (124) comprenant l'attaque du transistor à effet de champ sensiblement dans une plage de courant de sortie complète (331) partant de zéro jusqu'à un courant de drain maximum admissible (358) du transistor à effet de champ.
